# FASCICULE DE BREVET EUROPEEN

(11) **EP 1 571 367 B1**
(45) Date de publication et mention de la délivrance du brevet: **09.01.2008**
(21) Numéro de dépôt: 05290403.4
(22) Date de dépôt: 22.02.2005
(51) Int. Cl.: F16F 1/46, F16F 1/377, F01N 7/18

(54) **Dispositif de liaison antivibratoire**
Schwingungsdämpfende Verbindungsvorrichtung
Damping connection device

(30) Priorité: 02.03.2004 FR 0402147
(43) Date de publication de la demande: 07.09.2005
(73) Titulaire: HUTCHINSON, 75008 Paris (FR)
(72) Inventeur: Molet, Jacques, 28160 Gohory (FR); Porpe, Christophe, 28630 Le Coudray (FR)
(74) Mandataire: Burbaud, Eric

(56) Documents cités:
- EP-A- 0 505 325
- EP-A- 0 529 250
- DE-A- 4 125 680
- DE-U- 29 506 970
- FR-A- 2 705 727
- US-A- 4 893 778
- US-B1- 6 170 782
- US-B1- 6 264 164

## Description

L'invention concerne un dispositif de liaison antivibratoire entre deux éléments vibrant l'un par rapport à l'autre, par exemple une suspente d'échappement de véhicule.

Plus précisément l'invention concerne un dispositif de liaison antivibratoire entre un élément de structure vibrant et un élément de structure fixe comprenant :
- un corps en élastomère comportant deux parties de fixation destinées à être fixées respectivement chacune à un élément de structure,
- un anneau souple limiteur disposé autour du corps en élastomère et adapté pour limiter les débattements relatifs entre les deux éléments de fixation.

Les dispositifs de liaison antivibratoire actuels tels que décrits dans le document EP-B1-0 816 734 comportent un dispositif du type décrit précédemment dont l'élément limiteur est fixé de façon amovible.

Le document DE-U-295 06 970 décrit un dispositif antivibratoire tel que décrit ci-dessus, dans lequel l'anneau limiteur est fixé de manière amovible par l'intermédiaire de pattes bloquant l'anneau limiteur contre le corps en élastomère.

Dans ce type de dispositif, le limiteur n'est pas fixé au corps en élastomère et présente donc le risque de se détacher du corps en élastomère, ce qui entraîne une dégradation en tenue en endurance du corps en élastomère ; voir un déchirement de celui-ci sous un effort de traction trop important.

La présente invention a notamment pour but de pallier cet inconvénient.

A cet effet, selon l'invention, un dispositif de liaison antivibratoire du genre en question est caractérisé en ce que l'anneau limiteur est cousu sur le corps en élastomère au moins sur une zone , et en ce que le corps en élastomère présente sur sa circonférence au moins un plot faisant saillie sur lequel est cousu l'anneau limiteur.

Grâce à ces dispositions, le limiteur est assemblé au corps en élastomère de manière inamovible.

On peut éventuellement prévoir en outre que le plot est situé dans l'alignement des parties de fixation.

L'invention concerne aussi un procédé de fabrication dans lequel, le corps et l'anneau limiteur sont moulés de manière indépendante, l'anneau limiteur est positionné autour du corps en élastomère, puis l'anneau limiteur est cousu sur le plot du corps en élastomère, et enfin l'ensemble formé par l'anneau et le corps en élastomère est mis en place sur les éléments de structure.

D'autres caractéristiques et avantages de l'invention apparaîtront au cours de la description suivante d'un de ses modes de réalisation, donné à titre d'exemple non limitatif, en regard des dessins joints.

Sur les dessins :
- la figure 1 représente une vue en perspective d'un dispositif comme exemple utile à la compréhension de l'invention,
- la figure 2 représente une vue en perspective du dispositif selon l'invention.

Sur les différentes figures, les mêmes références désignent des éléments identiques ou similaires.

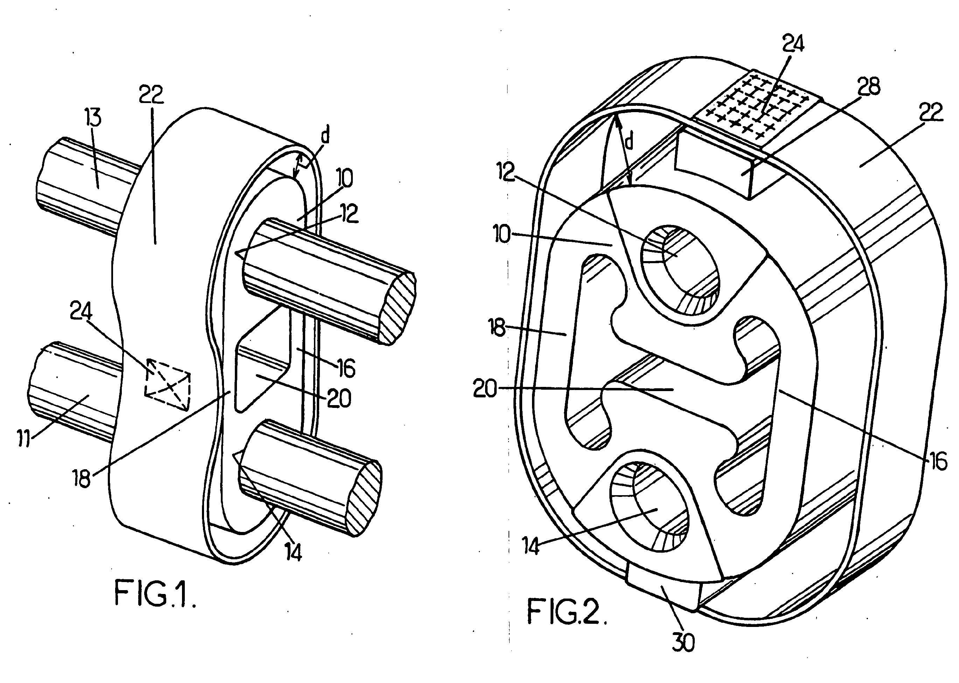

Tel que représenté à la figure 1, le dispositif de liaison antivibratoire comporte un corps en élastomère 10 comprenant deux parties de fixation 12, 14 destinées à être fixées respectivement à un élément de structure vibrant 11 et à un élément de structure fixe 13. Par exemple l'élément de structure vibrant 11 peut être un conduit d'échappement d'un véhicule, et l'élément de structure fixe 13 peut être la caisse du véhicule. Le dispositif de liaison anti-vibratoire permet de relier ces éléments, en amortissant les débattements de l'élément vibrant 11 vers l'élément fixe 13.

Les deux parties de fixation 12, 14 sont formées chacune d'une ouverture circulaire dans lesquelles est insérée une partie des éléments de structure. Ces ouvertures 12, 14 sont disposées à l'opposé l'une de l'autre, selon la direction de débattement dans le corps en élastomère 10, et sont reliées entre elles par l'intermédiaire de deux branches 16, 18 parallèles et s'étendant selon la direction de débattement, et délimitant une ouverture 20 centrale réalisée de manière à absorber les vibrations.

Tel que représenté à la figure 1, le corps 10 de dispositif est de forme oblongue, et les parties de fixation 12, 14 se trouvent à chaque extrémité longitudinale dudit corps.

Le dispositif comporte aussi un anneau limiteur 22 souple de forme oblongue entourant le corps en élastomère 10 à une distance d. L'anneau 22 est réalisé dans un matériau tel qu'une sangle de rayonne, moins extensible que le matériau du corps en élastomère 10, de manière à limiter les débattements relatifs entre les deux éléments de structure 11, 13.

L'anneau limiteur 22 est assemblé au corps en élastomère 10 grâce à une couture 24, afin de maintenir de manière inamovible le corps en élastomère 10 dans l'anneau 22.

Tel qu'illustré à la figure 1, la couture 24 est située sur une paroi longitudinale, sensiblement à équidistance des deux parties de fixations 12, 14. Cette couture 24 met en contact la face intérieure de l'anneau limiteur 22 avec la paroi extérieure du corps en élastomère 10, et solidarise l'anneau limiteur 22 au corps en élastomère 20.

La couture 24 illustrée à la figure 1 est un ensemble de points dessinant un rectangle et une croix, et fixe l'anneau limiteur 22 au corps en élastomère 10, tout en permettant le débattement du corps en élastomère 10 dans l'anneau limiteur 22 selon la direction longitudinale de débattement. Le corps en élastomère 10 présente une élasticité suffisante pour se déformer entre la zone de couture 24 et l'anneau limiteur 22.

Ainsi lorsque le corps en élastomère 22 est sollicité par les mouvements des éléments de structure, l'anneau limiteur 22 ne risque pas de se détacher du corps en élastomère 10, quelque soit la direction de débattement.

Sur la figure 2, le corps en élastomère comporte deux plots 28, 30 faisant saillie vers l'extérieur du corps en élastomère 10 dans le prolongement de la direction de débattement. Les plots 28, 30 ont une épaisseur égale à la distance d entre le corps en élastomère et l'anneau limiteur. L'anneau limiteur 22 est cousu sur les deux plots 28, 30 de manière inamovible. Tel que représenté à la figure 2, la couture 24 est réalisée sous la forme d'un quadrillage de fils sur l'ensemble de la surface du plot 28, 30. Ainsi l'anneau limiteur est maintenu aux plots 28, 30 de manière inamovible. Grâce à ces dispositions le corps en élastomère 10 n'est pas sollicité entre la zone de couture et la partie de fixation 12, 14 mais entre les deux parties de fixation 12, 14. Les plots 28, 30 subissent des efforts de traction ou de compression dus aux débattements des éléments de structure. Ces déformations sont limitées par l'anneau limiteur 22.

La couture est réalisée par des fils du type fils à coudre en nylon, tels que ceux utilisés sur les ceintures de sécurité.

L'invention concerne aussi un procédé de fabrication du dispositif de liaison antivibratoire selon l'invention qui comprend les étapes de moulage du corps en élastomère 10, le moulage de l'anneau limiteur 22 dans un moule indépendant, le positionnement de l'anneau limiteur 22 autour du corps en élastomère, une étape qui consiste à coudre l'anneau limiteur 22 sur le corps en élastomère 10, et enfin le positionnement du dispositif de liaison sur les éléments de structure.

## Revendications

1. Dispositif de liaison antivibratoire entre un élément de structure vibrant (11) et un élément de structure fixe (13) comprenant :
- un corps en élastomère (10) comportant deux parties de fixation (12, 14) destinées à être fixées respectivement chacune à un élément (11, 13),
- un anneau limiteur souple (22) disposé autour du corps en élastomère (10) et adapté pour limiter les débattements relatifs entre les deux éléments de fixation (12, 14),
**caractérisé en ce que** l'anneau limiteur (22) est cousu sur le corps en élastomère (10) au moins sur une zone, et
**en ce que** le corps en élastomère (10) présente sur sa circonférence au moins un plot (28, 30) faisant saillie sur lequel est cousu l'anneau limiteur (22).

2. Dispositif de liaison antivibratoire selon la revendication précédente, **caractérisé en ce que** le plot (28, 30) est situé dans l'alignement des parties de fixation (12, 14).

3. Procédé de fabrication d'un dispositif de liaison antivibratoire selon la revendication 1, **caractérisé en ce qu'**il comprend les étapes suivantes :
- moulage du corps en élastomère (10) comportant sur sa circonférence au moins un plot ;
- moulage de l'anneau limiteur (22) ;
- positionnement de l'anneau limiteur (22) autour du corps en élastomère (10) ;
- couture de l'anneau limiteur (22) sur le plot du corps en élastomère (10) ;
- et mise en place du dispositif sur les éléments de structure.

## Claims

1. A vibration-damping coupling device for coupling a vibrating structure (11) element to a fixed structure element (13), said device comprising:
- an elastomer body (10) provided with two fastening portions (12, 14) each designed to be fastened to a respective one of said elements (11, 13),
- a flexible limiter loop (22) disposed around the elastomer body (10) and adapted to limit the travel to which the two fastening elements can move relative to each other (12, 14),
**characterized in that** the limiter band (22) is stitched to the elastomer body (10) at least over one zone,
and **in that** the elastomer body (10) is provided on its circumference with at least one projecting pad (28, 30) to which the limiter loop (22) is stitched.

2. A vibration-damping coupling according to the preceding claim, **characterized in that** the pad (28, 30) is situated in alignment with the fastening portions (12, 14).

3. A method of manufacturing a vibration-damping coupling device according to claim 1, **characterized in that** it comprises the following steps:
- molding the elastomer body (10) comprising at least one pad on its circumference;
- molding the limiter loop (22);
- positioning the limiter loop (22) around the elastomer body (10);
- stitching the limiter loop (22) to the pad of elastomer body (10);
- and putting the device in place on the structure elements.

## Patentansprüche

1. Schwingungsdämpfende Verbindungsvorrichtung zwischen einem schwingenden Strukturelement (11) und einem festen Strukturelement (13), umfassend:
- einen Elastomerkörper (10) mit zwei Befestigungsabschnitten (12, 14), die dazu bestimmt sind, jeweils an einem Element (11, 13) befestigt zu werden,
- einen elastischen Begrenzungsring, der um den Elastomerkörper (10) angeordnet und zur Begrenzung der entsprechenden Ausschläge zwischen den zwei Befestigungselementen (12, 14) geeignet ist,
**dadurch gekennzeichnet, dass** der Begrenzungsring (22) auf dem Elastomerkörper (10) mindestens in einem Bereich aufgenäht ist, und **dadurch, dass** der Elastomerkörper (10) auf seinem Umfang mindestens einen vorstehenden Klotz (28, 30) aufweist, über dem der Begrenzungsring (22) aufgenäht ist.

2. Schwingungsdämpfende Verbindungsvorrichtung nach dem vorangehenden Anspruch, **dadurch gekennzeichnet, dass** sich der Klotz (28, 30) in der Fluchtlinie der Befestigungsabschnitte (12, 14) befindet.

3. Verfahren zur Herstellung einer schwingungsdämpfenden Vorrichtung nach Anspruch 1, **dadurch gekennzeichnet, dass** es die folgenden Schritte umfasst:
- Formen des Elastomerkörpers (10), der auf seinem Umfang mindestens einen Klotz aufweist,
- Formen des Begrenzungsrings (22),
- Positionieren des Begrenzungsrings (22) um den Elastomerkörper (10),
- Nähen des Begrenzungsrings (22) auf den Klotz des Elastomerkörpers (10),
- Anbringen der Vorrichtung auf den Strukturelementen.
